# EUROPÄISCHE PATENTANMELDUNG

(11) **EP 0 846 488 A1**
(43) Veröffentlichungstag der Anmeldung: **10.06.1998**
(21) Anmeldenummer: 97120388.0
(22) Anmeldetag: 20.11.1997
(51) Int. Cl.: B01D 46/24, B01D 46/42, B01D 41/04

(54) **Verfahren zum Austauschen eines in einem Filtergehäuse enthaltenen Filterelementes**

(30) Priorität: 05.12.1996 DE 19650510
(71) Anmelder: NORDFAB A/S, DK-9550 Mariager (DK)
(72) Erfinder: Mygind, Jens G., Hadsund Syd, 9560 Hadsund (DK); Klove, René H., Romalt, 8900 Randers (DK); Bihlet, Klaus, O. Torslev, 8983 Gjerlev J. (DK)
(74) Vertreter: Patentanwälte Leinweber & Zimmermann

(57) **Zusammenfassung**

Die Erfindung betrifft ein Verfahren zum Austauschen eines in einem Filtergehäuse, welches eine Austauschöffnung, eine die Austauschöffnung umlaufende erste Anlagefläche sowie eine die Austauschöffnung umlaufend zwischen dieser und der ersten Anlagefläche angeordnete zweite Anlagefläche aufweist, enthaltenen Filterelementes, bei dem das Filterelement durch die Austauschöffnung in einen außerhalb des Filtergehäuses angeordneten, eine entsprechende Einführöffnung aufweisenden Behälter eingeführt wird, wobei ein die Einführöffnung umlaufender Anlagebereich des ersten Behälters in dichtender Anlage an einer der Anlageflächen am Filtergehäuse befestigt ist, der erste Behälter an zwei Stellen zwischen dem darin aufgenommenen Filterelement und der Austauschöffnung dicht verschlossen und dann zwischen diesen Stellen durchtrennt wird, der das Filterelement enthaltende Teil des ersten Behälters abtransportiert wird, während dessen Rest noch am Filtergehäuse befestigt ist und dessen Austauschöffnung so verschließt, ein ein Austauschfilterelement enthaltender zweiter Behälter so an dem Filtergehäuse befestigt wird, daß ein eine Einführöffnung davon umlaufender Anlagebereich dicht an der ersten Anlagefläche anliegt, der Rest des ersten Behälters innerhalb des zweiten Behälters von der Austauschöffnung entfernt und das Austauschfilterelement durch die Einführöffnung des zweiten Behälters und die Austauschöffnung in das Filtergehäuse eingesetzt wird, wobei der Anlagebereich des ersten Behälters während der Einführung des Filterelementes in den ersten Behälter in dichtender Anlage an der zweiten Anlagefläche des Filtergehäuses befestigt ist.

## Beschreibung

Die Erfindung betrifft ein Verfahren zum Austauschen eines in einem Filtergehäuse, welches eine Austauschöffnung, eine die Austauschöffnung umlaufende erste Anlagefläche sowie eine die Austauschöffnung umlaufend zwischen dieser und der ersten Anlagefläche angeordnete zweite Anlagefläche aufweist, enthaltenen Filterelementes, bei dem das Filterelement durch die Austauschöffnung in einen außerhalb des Filtergehäuses angeordneten, eine entsprechende Einführöffnung aufweisenden Behälter eingeführt wird, wobei ein die Einführöffnung umlaufender Anlagebereich des Behälters in dichter Anlage an einer der Anlageflächen am Filtergehäuse befestigt ist, der erste Behälter an zwei Stellen zwischen dem darin aufgenommenen Filterelement und der Austauschöffnung dicht verschlossen und dann zwischen diesen Stellen durchtrennt wird, der das Filterelement enthaltende Teil des ersten Behälters abtransportiert wird, während dessen Rest noch am Filtergehäuse befestigt ist und dessen Austauschöffnung so verschließt, ein ein Austauschfilterelement enthaltender zweiter Behälter so an dem Filtergehäuse befestigt wird, daß ein eine Einführöffnung davon umlaufender Anlagebereich dicht an der ersten Anlagefläche anliegt, der Rest des ersten Behälters innerhalb des zweiten Behälters von der Austauschöffnung entfernt und das Austauschfilterelement durch die Einführöffnung des zweiten Behälters und die Austauschöffnung in das Filtergehäuse eingesetzt wird.

Derartige Verfahren werden beispielsweise zum Austauschen von Filterelementen, die mit in der Metallindustrie, der chemischen, pharmazeutischen und Lebensmittelindustrie entstehenden, hochgiftigen Filterstäuben belastet sind, verwendet, um die Belastung der Umgebung und der den Austausch durchführenden Wartungsmitarbeiter so gering wie möglich zu halten. Das wird mit dem oben beschriebenen, bekannten Verfahren erreicht, weil die belasteten Filterelemente bei dessen Ausführung zu keinem Zeitpunkt in direktem Kontakt mit der Umgebung stehen und auch nicht direkt von dem zuständigen Wartungsmitarbeiter berührt werden, und der staubbelastete Innenraum des Filtergehäuses zu jedem Zeitpunkt durch einen der Filterelementbehälter staubdicht abgeschlossen ist.

Zur Durchführung eines bekannten Verfahrens der eingangs beschriebenen Art ist eine Außenwand des Filtergehäuses mit einem nach außen weisenden ringförmigen Flansch versehen, dessen äußerer Rand die Austauschöffnung bildet. Dieser Flansch ist an seiner Außenseite mit zwei parallel zueinander und parallel zum äußeren Rand umlaufenden, jeweils eine Anlagefläche bildenden Nuten versehen. Zum Austauschen des in dem Filtergehäuse angeordneten Filterelementes ist ein Behälter in Form eines Plastiksacks vorgesehen, dessen eine Einführungsöffnung davon umlaufender Rand in der der Gehäusewand benachbarten Nut des Flansches aufgenommen und so am Filtergehäuse befestigt ist. Durch den so befestigten Plastiksack ist der Innenraum des Filtergehäuses mit dem darin aufgenommenen Filterelement staubdicht gegenüber der Umgebung abgeschlossen. Es ist bekannt, daß die Dichtigkeit weiter verbessert werden kann, wenn in den die Einführöffnung umgebenden Rand des Pastiksacks eine Schnur eingearbeitet wird, welche zusammen mit dem Rand in die Nut eingelegt und zur Abdichtung gespannt werden kann.

In diesem Zustand kann das Filterelement aus dem Filtergehäuse in den Plastiksack eingeführt werden. Danach wird der Plastiksack an zwei Stellen zwischen dem nunmehr darin aufgenommenen Filterelement und der Austauschöffnung des Filtergehäuses beispielsweise mit Hilfe von Schlauchklemmen oder ähnlichen Quetschelementen staubdicht verschlossen und zwischen den Quetschelementen durchtrennt. Auf diese Weise kann das Filterelement ohne in Kontakt mit der Umgebung zu treten staubdicht in den Plastiksack eingeschlossen werden, während gleichzeitig der Innenraum des Filtergehäuses mit Hilfe des weiterhin an dem Flansch befestigten Restes des Plastiksacks staubdicht abgeschlossen bleibt. In diesem Zustand wird nun der die Einführöffnung des Plastiksackrestes umlaufende Rand von der der Filtergehäusewand benachbarten Nut des Flansches unter Beibehaltung einer dichten Anlage an dem Flansch in die der Austauschöffnung (dem äußeren Rand des Flansches) benachbarte Nut verschoben.

Anschließend kann dann der eine Einführöffnung eines ein Austauschfilterelement enthaltenden zweiten Behälters in Form eines Plastiksacks umlaufender Rand des zweiten Behälters in die der Filtergehäusewand benachbarte Nut des Flansches eingelegt und dort ebenfalls mit Hilfe einer Schnur in staubdichter Anlage an der Nut befestigt werden. In diesem Zustand wird die Austauschöffnung des Filterghäuses durch den zweiten Plastiksack dicht verschlossen, in dem auch noch der an dem Flansch befestigte Rest des ersten Plastiksacks aufgenommen ist. Dieser Rest kann nun unter Beibehaltung eines staubdichten Verschlusses der Austauschöffnung mit Hilfe des zweiten Plastiksacks durch den zweiten Plastiksack hindurch von dem Flansch gelöst und in einen hinteren Bereich des zweiten Plastiksacks überführt werden. Das Austauschfilterelement kann dann durch die so freigegebene Austauschöffnung in das Filtergehäuse eingesetzt werden. Ein ähnliches Verfahren, bei dem ein luftdicht verschweißbarer Wartungssack, der mindestens zwei Kanal-Luftfilterzellen gleichzeitig aufnehmen kann, verwendet wird, ist aus der DE-GM 19 34 565 bekannt.

Mit den bekannten Verfahren kann ein nahezu staubfreier Austausch der Filterelemente vorgenommen werden. Während eines Langzeitbetriebs der mit den vorstehend beschriebenen Austauschverfahren gewarteten Filteranlagen hat es sich jedoch gezeigt, daß es in der Umgebung der Filteranlagen immer noch zu gesundheitsgefährdenden Filterstaubansammlungen kommen kann.

Demgegenüber liegt der Erfindung die Aufgabe zugrunde, ein Verfahren der eingangs genannten Art bereitzustellen, mit dem der Austritt von Filterstaub beim Austausch von in einem Filtergehäuse enthaltenen Filterelementen weiter verringert werden kann.

Diese Aufgabe wird erfindungsgemäß dadurch gelöst, daß der Anlagebereich des ersten Behälters bereits während der Einführung des Filterelementes in den ersten Behälter in dichter Anlage an der zweiten (der Austauschöffnung benachbarten) Anlagefläche des Filtergehäuses befestigt ist.

Diese Lösung geht auf die Erkenntnis zurück, daß die bei dem bekannten Verfahren noch entstehenden Staubansammlungen in der Nähe der Filteranlage in erster Linie auf sich während des Einführens des Filterelementes in den ersten Behälter im Bereich der Austauschöffnung an der Innenseite des ersten Behälters und zwischen der ersten Anlagefläche und der zweiten Anlagefläche anlagernde Stäube zurückzuführen sind, welche bei der Verschiebung des Anlagebereichs des ersten Behälters von der ersten Anlagefläche zur zweiten Anlagefläche aus dem am Filtergehäuse verbleibenden Rest des ersten Behälters austreten können bzw. freigesetzt werden.

Bei dem erfindungsgemäßen Verfahren ist eine solche Verschiebung des hauptsächlich durch die Entnahme des Filterelementes aus dem Filtergehäuse kontaminierten Behälterrestes, durch die auch noch der kontaminierte Gehäusebereich zwischen der ersten Anlagefläche und der zweiten Anlagefläche freigelegt wird, nicht erforderlich. Vielmehr kann dieser Behälterrest sicher von der Austauschöffnung entfernt werden, wenn diese bereits durch den zweiten, das Austauschfilterelement enthaltenden Behälter staubdicht verschlossen ist, ohne daß dadurch ein kontaminierter Gehäusebereich freigelegt wird.

Zum staubfreien Austausch des mit dem erfindungsgemäßen Verfahren in das Filtergehäuse eingesetzten Austauschfilterelementes durch ein weiteres, ebenfalls in einem staubdichten Behälter angeliefertes Filterelement ist es besonders zweckmäßig, wenn der Anlagebereich des zweiten Behälters nach Entfernung des Restes des ersten Behälters von der Austauschöffnung und vorzugsweise vor dem Einsetzen des Austauschfilterelementes in das Filtergehäuse von der ersten Anlagefläche gelöst und in dichtender Anlage an der zweiten Anlagefläche befestigt wird. Auf diese Weise kann die für eine weitere Ausführung des erfindungsgemäßen Verfahrens erforderliche Verschiebung des Anlagebereichs des zweiten Behälters in einem Zustand ausgeführt werden, in dem ein der Austauschöffnung benachbarter Bereich des zweiten Behälters noch nicht durch das Austauschfilterelement kontaminiert wurde, während gleichzeitig ein Austritt der an dem im zweiten Behälter aufgenommenen Reste des ersten Behälters haftenden Filterstäube während der Verschiebung nahezu ausgeschlossen werden kann, weil dieser Rest zuvor innerhalb des zweiten Behälters von der Austauschöffnung entfernt wurde.

Zur Vermeidung von Beschädigungen des im allgemeinen in Form von Plastiksäcken vorliegenden zweiten Behälters während des Betriebs der Filteranlage mit dem Austauschfilterelement ist es besonders zweckmäßig, wenn die Austauschöffnung nach Einsetzen des Austauschfilterelementes so mit einer Abdeckung verschlossen wird, daß der zweite Behälter zwischen dem in das Filtergehäuse eingesetzten Austauschfilterelement und der Abdeckung angeordnet ist.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert.

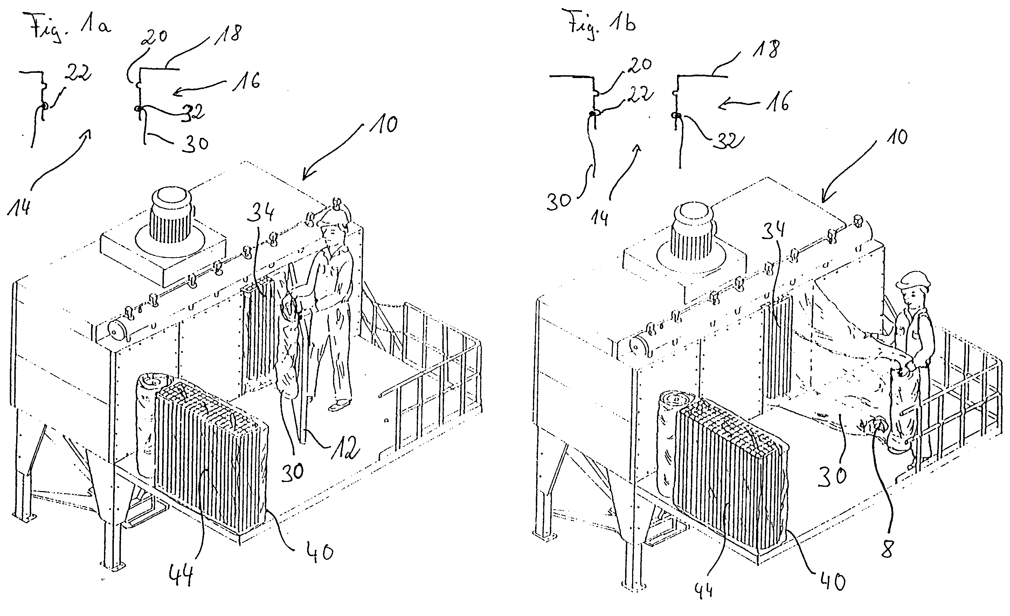

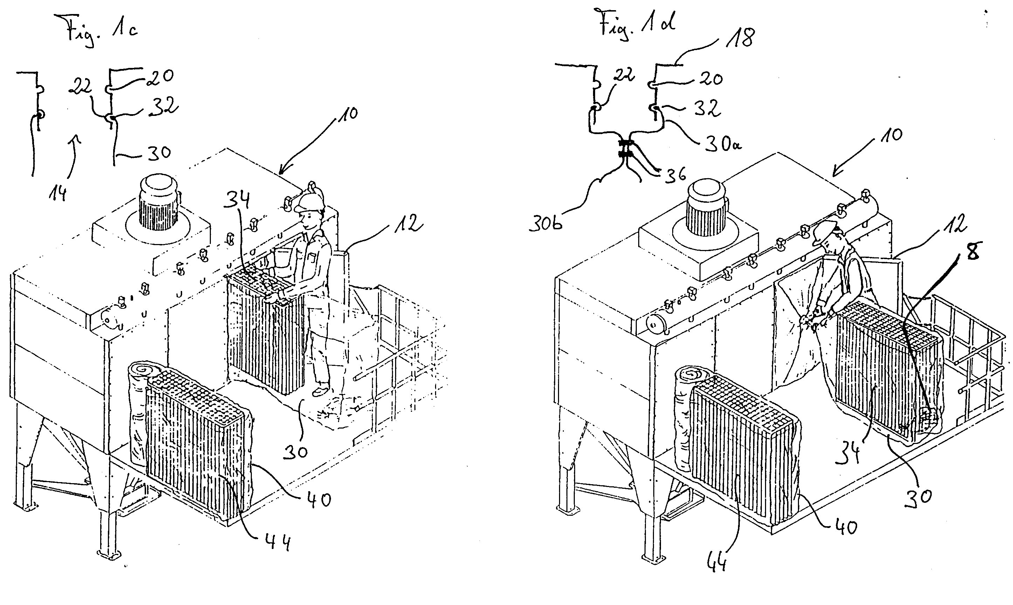

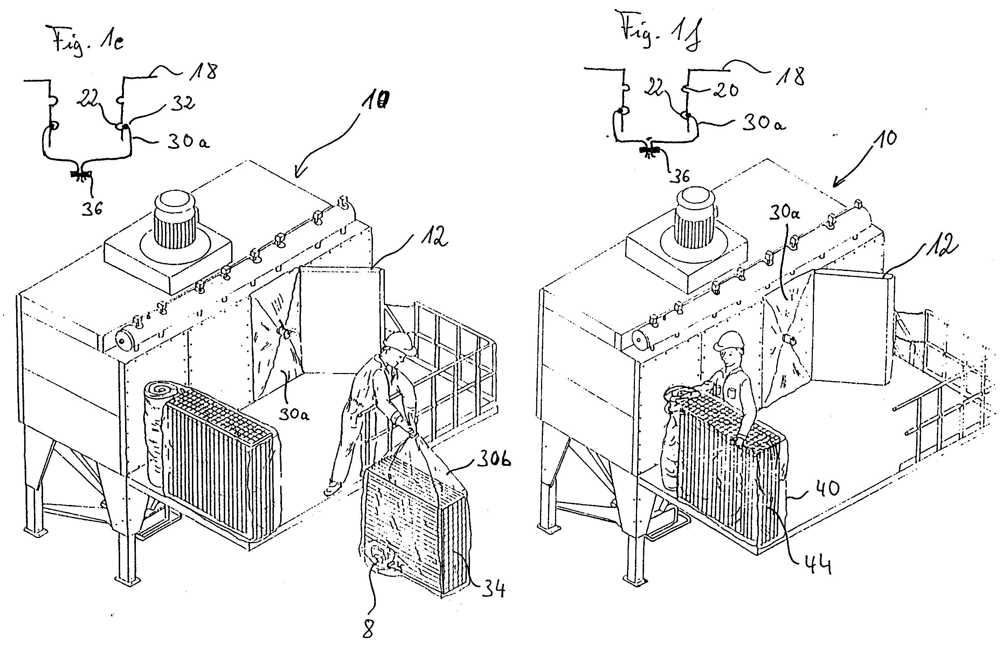

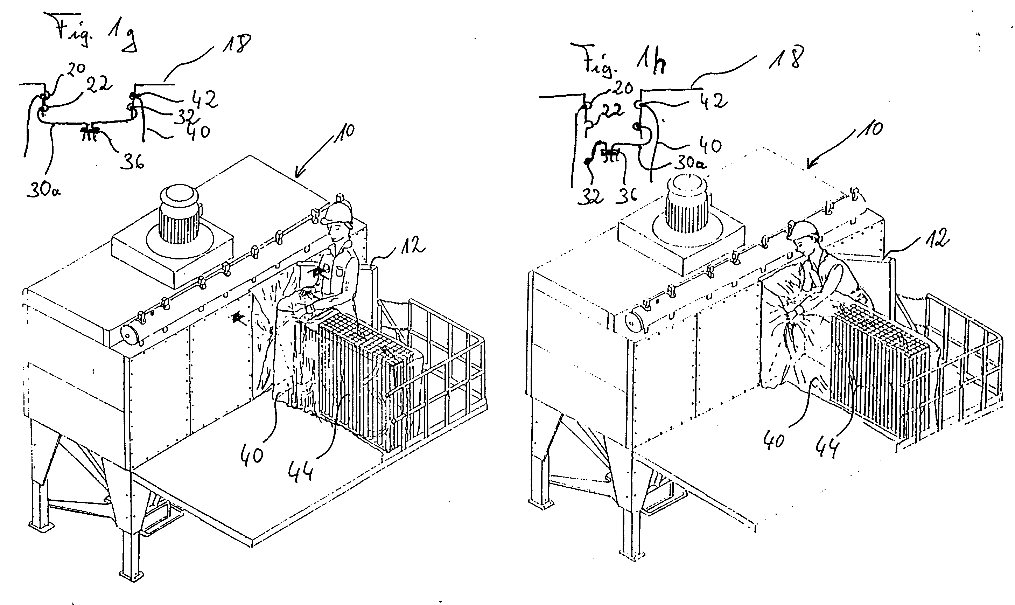

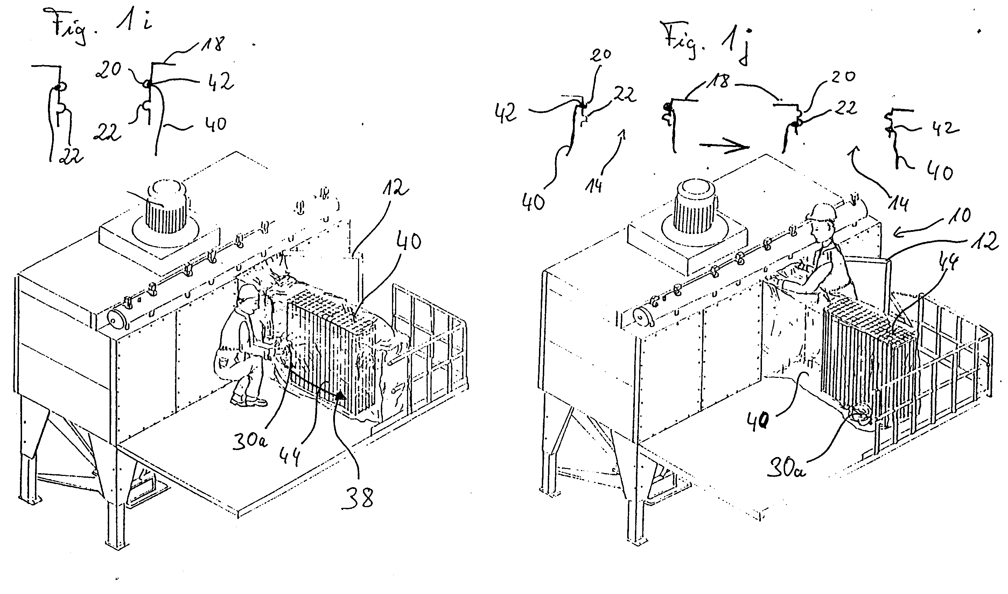

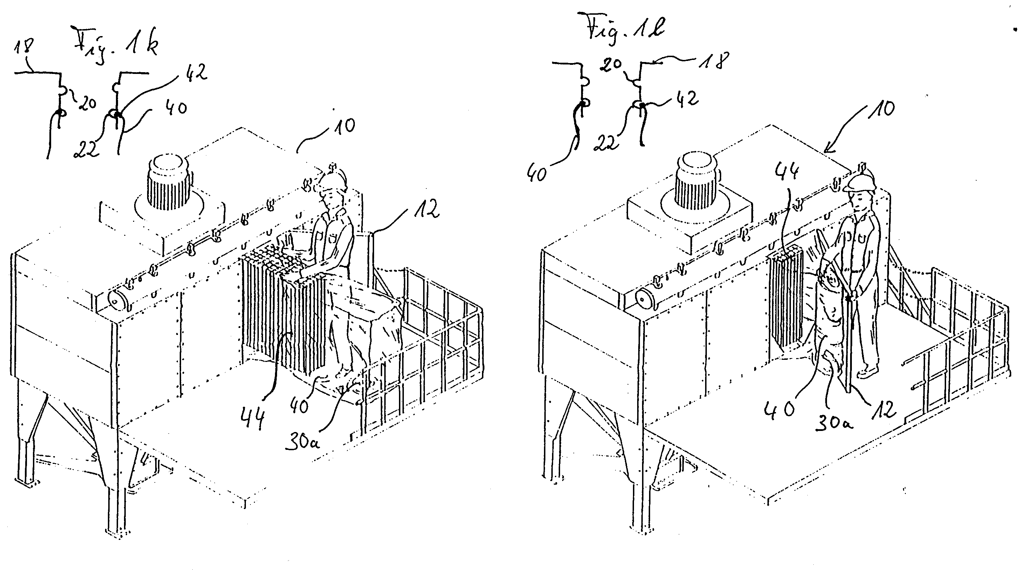

In den Fig. 1a bis 1ℓ sind einzelne Schritte des erfindungsgemäßen Verfahrens veranschaulicht, wobei in der oberen linken Ecke jeder Figur eine die Befestigung der einzelnen Filterelementbehälter an den Filtergehäuse bei dem jeweiligen Verfahrensschritt detailliert zeigende Ausschnittvergrößerung angegeben ist.

Bei dem in Fig. 1a dargestellten Schritt wird zum Austausch eines staubbeladenen Filterelementes 34 in Form einer Filterkassette, die in einem Filtergehäuse 10 aufgenommen ist, zunächst eine in Form einer Tür 12 gebildete Abdeckung vom Filtergehäuse 10 entfernt, um so eine Austauschöffnung 14 im Filtergehäuse 10 zugänglich zu machen. Die Austauschöffnung 14 ist von einem äußeren Rand eines von einer Außenwand 18 des Filtergehäuses 10 nach außen ragenden Flansches 16 gebildet. In dem Flansch 16 sind zwei die Austauschöffnung 14 parallel zueinander umlaufende Vertiefungen oder Nuten 20 und 22 gebildet. In der der Auslaßöffnung 14 benachbarten Vertiefung 22 ist ein in den Rand einer Einführöffnung eines Plastikbeutels 30 eingelassenes Spannband 32 aufgenommen. Auf diese Weise wird die Austauschöffnung 14 durch den zuvor zwischen der Tür 12 und dem Filterelement 34 angeordneten Plastiksack 30 dicht verschlossen, indem das einen Anlagebereich des Plastiksacks 30 unter Wirkung der durch das Spannband bereitgestellten Vorspannkraft in dichtender Anlage an der die zweite Anlagefläche des Filtergehäuses 10 bereitstellenden Vertiefung 22 im Flansch 16 anliegt. In diesem Zustand kann nun der Plastiksack 30 unter Beibehaltung eines staubdichten Verschlusses der Austauschöffnung 14 entrollt werden, wie in Fig. 1b dargestellt. In dem Plastiksack 30 ist, wie ebenfalls der Fig. 1b zu entnehmen ist, noch ein Rest 8 eines für einen vorhergehenden Filterelementaustausch benutzten Plastiksacks enthalten.

Nach Ausrollen des Plastiksacks 30 kann nun das Filterelement 34 durch die Austauschöffnung 14 in den Plastiksack 30 eingeführt werden. Dazu kann der Wartungsmitarbeiter das Filterelement 34 unter Vermeidung einer direkten Berührung desselben durch den Plastiksack 30 hindurch erfassen und in den Plastiksack 30 hineinschieben, wie in Fig. 1c dargestellt. Anschließend wird der Plastiksack dann an zwei Stellen zwischen dem nunmehr darin aufgenommenen Filterelement 34 und der Austauschöffnung 14 mit Schnüren 36 dicht verschlossen bzw. verschnürt, wie in Fig. 1d dargestellt. Nach Durchtrennung des Plastiksacks 30 zwischen den beiden Verschnürungen 36 kann ein Teil 30b des Plastiksacks mit dem darin aufgenommenen Filterelement 34 zur Entsorgung entfernt werden, während das Filtergehäuse noch mit dem an der Vertiefung 22 befestigten Rest 30a des Plastiksacks 30 und der daran verbliebenen Verschnürung 36 staubdicht verschlossen ist, wie in Fig. 1e dargestellt.

In diesem Zustand kann nun ein in einem zweiten Plastiksack 40 enthaltenes Austauschfilterelement 44 in Position gebracht werden, wie in Fig. 1f dargestellt. Der Rand einer Einführöffnung des Plastiksacks 40 ist ebenfalls mit einem Spannband 42 versehen, das in die der Gehäuseaußenwand 18 benachbarte Vertiefung 20 eingefügt werden kann, so daß die Austauschöffnung 14 des Gehäuses 10 auch noch durch den zweiten Plastiksack 40 staubdicht verschlossen wird. Dieser Zustand ist in Fig. 1g dargestellt.

Nunmehr kann unter Beibehaltung eines staubdichten Verschlusses der Austauschöffnung 14 mit Hilfe des zweiten Plastiksacks 40 der noch an der Austauschöffnung verbliebene Rest 30a des ersten Plastiksacks 30 aus der der Austauschöffnung 14 benachbarten Vertiefung 22 gelöst werden, wie in Fig. 1h dargestellt. Dazu kann der Wartungsmitarbeiter den Rest 30a unter Vermeidung einer direkten Berührung desselben durch den zweiten Plastiksack 40 hindurch erfassen. Anschließend kann der Rest 30a des ersten Plastiksacks 30 zu einer Kugel zusammengerollt und wie in Fig. 1i durch Pfeil 38 angedeutet in einen hinteren Teil des zweiten Plastiksacks 40 gebracht werden. Auch dazu kann der Wartungsmitarbeiter den Rest 30a durch den zweiten Sack 40 hindurch erfassen. Während dieses Vorgangs ist die Austauschöffnung 14 durch den Plastiksack 40 und das in der Vertiefung 20 aufgenommene Spannband 42 staubdicht verschlossen. Nach Entfernung des Restes 30a des ersten Plastiksacks von der Austauschöffnung 14 kann das Spannband 42 des zweiten Plastiksacks 40 unter Veremeidung der Freisetzung von Filterstaub aus der der Gehäuseaußenwand 18 benachbarten Vertiefung 20 in die der Austauschöffnung 14 benachbarte, zwischen dieser und der ersten Vertiefung 20 angeordnete Vertiefung 22 verschoben werden, wodurch bereits der Austausch des zu diesem Zeitpunkt noch gar nicht in das Filtergehäuse 10 eingesetzten Austauschfilterelementes 44 durch ein weiteres Filterelement vorbereitet wird. Dieser Vorgang ist in Fig. 1j dargestellt.

Nunmehr kann der Wartungsmitarbeiter das Austauschfilterelement 44 durch die Austauschöffnung 14 in das Filtergehäuse 10 einsetzen, indem er es durch den zweiten Plastiksack 40 ergreift und in das Filtergehäuse 10 hineinschiebt, wie in Fig. 1k dargestellt. Auch dabei ist die Austauschöffnung 14 durch den zweiten Plastiksack 40 und das in der Vertiefung 22 aufgenommene Spannband 42 staubdicht verschlossen. Schließlich kann der zweite Plastiksack 40 mit dem darin enthaltenen Rest 30a des ersten Plastiksacks eingerollt und die Austauschöffnung 14 mit der in Form der Tür 12 gebildeten Abdeckung verschlossen werden, wobei der eingerollte Plastiksack 40 zwischen dem nunmehr in dem Filtergehäuse 10 eingesetzten Austauschfilterelement 44 und der Tür 12 angeordnet wird, wie in Fig. 1ℓ angedeutet.

Die Erfindung ist nicht auf das anhand der Zeichnung erläuterte Ausführungsbeispiel beschränkt. Vielmehr ist es auch möglich, den ersten Plastiksack in der anhand der Fig. 1d erläuterten Verfahrensstufe durch zwei Schweißverbindungen zu verschließen. Ferner ist auch daran gedacht, mit dem erfindungsgemäßen Verfahren zweiteilige Filterelemente auszutauschen, wobei jedes einzelne Filterelementteil ähnlich der anhand der Fig. 1d und 1h erläuterten Verfahrensweise einzeln in einen Teil eines Plastiksacks staubdicht eingeschlossen wird. Schließlich können anstelle der Plastiksäcke auch zumindest teilweise starr ausgebildete Filterelementbehälter eingesetzt werden.

## Patentansprüche

1. Verfahren zum Austauschen eines in einem Filtergehäuse, welches eine Austauschöffnung, eine die Austauschöffnung umlaufende erste Anlagefläche sowie eine die Austauschöffnung umlaufend zwischen dieser und der ersten Anlagefläche angeordnete zweite Anlagefläche aufweist, enthaltenen Filterelementes,
bei dem das Filterelement durch die Austauschöffnung in einen außerhalb des Filtergehäuses angeordneten, eine entsprechende Einführöffnung aufweisenden Behälter eingeführt wird, wobei ein die Einführöffnung umlaufender Anlagebereich des ersten Behälters in dichtender Anlage an einer der Anlagoflächen am Filtergehäuse befestigt ist,
der erste Behälter an zwei Stellen zwischen dem darin aufgenommenen Filterelement und der Austauschöffnung dicht verschlossen und dann zwischen diesen Stellen durchtrennt wird,
der das Filterelement enthaltende Teil des ersten Behälters abtransportiert wird, während dessen Rest noch Filtergehäuse befestigt ist und dessen Austauschöffnung so verschließt,
ein ein Austauschfilterelement enthaltender zweiter Behälter so an dem Filtergehäuse befestigt wird, daß ein eine Einführöffnung davon umlaufender Anlagebereich dicht an der ersten Anlagefläche anliegt,
der Rest des ersten Behälters innerhalb des zweiten Behälters von der Austauschöffnung entfernt und das Austauschfilterelement durch die Einführöffnung des zweiten Behälters und die Austauschöffnung in das Filtergehäuse eingesetzt wird,
dadurch gekennzeichnet, daß der Anlagebereich des ersten Behälters während der Einführung des Filterelementes in den ersten Behälter in dichtender Anlage an der zweiten Anlagefläche des Filtergehäuses befestigt ist.

2. Verfahren nach Anspruch 1, dadurch gekennzeichnet, daß der Anlagebereich des zweiten Behälters nach Entfernung des Restes des ersten Behälters von der Austauschöffnung und vor der Einführung des zweiten Filterelements in das Filtergehäuse von der ersten Anlagefläche gelöst und an der zweiten Anlagefläche dichtend befestigt wird.

3. Verfahren nach Anspruch 1 oder 2, dadurch gekennzeichnet, daß die Austauschöffnung nach Einsetzen des Austauschfilterelementes so mit einer Abdeckung verschlossen wird, daß der zweite Behälter zwischen dem in das Filtergehäuse eingesetzten Austauschfilterelement und der Abdeckung angeordnet ist.
